# EUROPEAN PATENT SPECIFICATION

(11) **EP 2 551 590 B1**
(45) Date of publication and mention of the grant of the patent: **16.04.2014**
(21) Application number: 12005349.1
(22) Date of filing: 23.07.2012
(51) Int. Cl.: F23D 14/58

(54) **Improved super-stoichiometric burner**
Verbesserter superstöchiometrischer Brenner
Brûleur super-stochiométrique amélioré

(30) Priority: 25.07.2011 IT BG20110030
(43) Date of publication of application: 30.01.2013
(73) Proprietor: Polidoro S.p.A., 36015 Schio VI (IT)
(72) Inventor: Peserico, Domenico, 36015 Schio (VI) (IT); Dalle Nogare, Manuel, 36015 Schio (VI) (IT)
(74) Representative: Lecce, Giovanni

(56) References cited:
- WO-A1-2004/104477
- GB-A- 1 462 985
- US-A- 5 215 457

## Description

The present invention relates to an improved super-stoichiometric burner.

More specifically, the present invention relates to a premixing burner for heating boilers, provided with specific groups of through apertures along the surfaces to achieve a flame transfer function according to a defined amplitude and phase.

It is known that the pre-mixing burners currently used for making boilers are fitted with a multiplicity of through apertures in the form of groups of holes and slots, formed on the surface along which combustion takes place. Such multiplicity of through apertures is defined, as regards the groups of holes, by circular holes of the same dimension. In other words, each group of apertures of a circular layout is formed of a plurality of holes of the same diameter, suitably spread over the combustion surface.

It has been found however that this traditional solution has a significant drawback.

The problem is the presence of noise developing in a variable manner in the various operating conditions. In fact, an appliance such as a boiler wherein a heat source is present is subject to thermoacoustic phenomena, caused by the feedback loop induced by the system, by the burner and by the combustion regime. One may witness the formation of thermoacoustic system instability phenomena when the feedback mechanism creates pressure waves in phase with the oscillation of the flame; in particular, the most intense noise is generated when the heat emission and pressure oscillations are in phase with each other, especially dependent on the geometry of the holes present on the burner.

US5215457 discloses a process for obtaining a plurality of small flames which become violet when combusting natural gas. The reference shows burners comprising rows of slots and holes arranged between pairs of slot rows.

WO2004104477 discloses a burner body provided with a diffuser in the surface of which openings are made. The openings are shown as comprising rows of slots alternating with rows of holes.

GB 1462985 discloses a burner provided with a pattern of burner orifices constituted by slots parallel to one another and perpendicuiar to the axis of the burner, and circular holes at each end of each slot.

The purpose of the present invention is to overcome the drawback complained of above.

More specifically, the purpose of the present invention is to provide an improved super-stoichiometric burner suitable for creating, on said burner, a flame transfer function having a defined amplitude and phase.

A further purpose of the present invention is to provide a super-stoichiometric burner as defined above, wherein said flame transfer function is such as to prevent coupling with the perturbation deriving from the feedback mechanism, which gives rise to pressures waves in phase with the oscillation of said flame.

A further purpose of the present invention is make available to users an improved super-stoichiometric burner suitable for ensuring a high level of resistance and reliability over time, in addition such as to be easy and economical to produce.

These and further purposes are achieved by the improved super-stoichiometric burner as claimed in claim 1.

The construction and functional characteristics of the improved super-stoichiometric burner of the present invention will be more clearly comprehensible from the description below in which reference is made to the appended drawings which show a preferred embodiment in relation to the relevant prior art and wherein:
figure 1 schematically represents a portion of the surface provided with through apertures of a super-stoichiometric burner according to the prior art;
figure 2 schematically represents a portion of the surface provided with through apertures of the super-stoichiometric burner according to the invention.

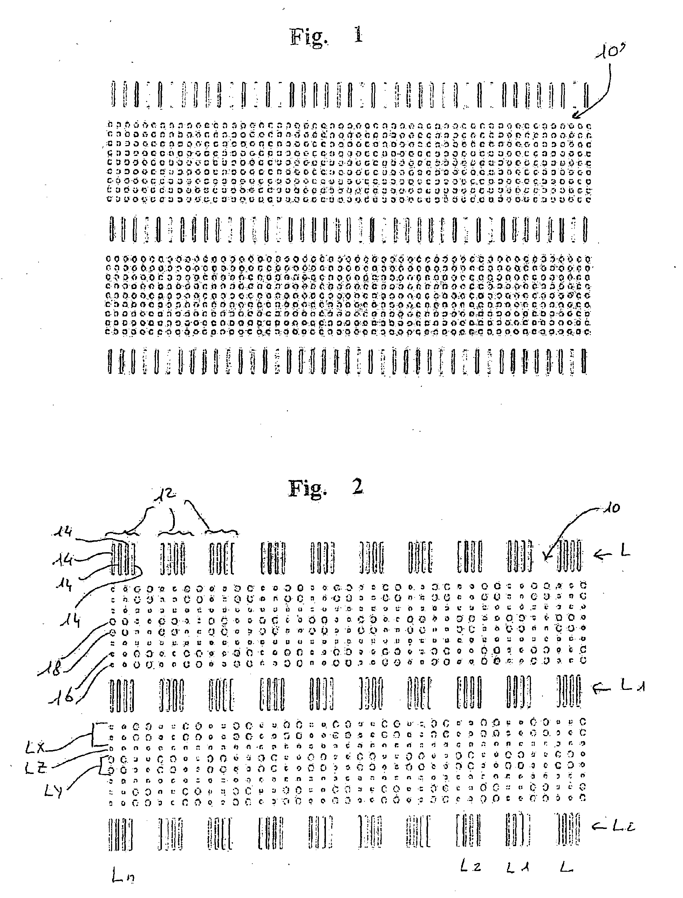

With reference to the aforesaid figures, the improved super-stoichiometric burner of the present invention has any shape and dimension of the planar or non-planar surface, indicted by reference numeral 10 in figure 2, on which multiple through apertures are made, consisting of groups of slots and holes of a circular shape. Compared to the prior embodiment illustrated in figure 1, in which the surface provided with through apertures is indicated by reference numeral 10', some of the through apertures of the surface 10 of the burner according to the invention are dimensionally different. In particular, said surface 10 presents a plurality of distanced groups 12 of slots 14, which form lines L, L1, L2, Ln aligned with each other in a horizontal and vertical direction. Such groups of slots 12 may be distanced from each other or form a continuous plurality of slots to give rise to the aforesaid lines L, L1, L2. In the space between each pair of said lines extending in a horizontal direction, a multiplicity of small circular holes is made, equally distributed in a horizontal and vertical direction. According to the preferred embodiment illustrated by way of example in figure 2, said holes extend horizontally on eight lines and are alternated two by two along each line with different diameters.

In particular, the holes having a smaller diameter are indicated by reference numeral 16, while those having a larger diameter are indicted by reference numeral 18.The difference in size as regards diameter between the holes 16 and 18 is equal to at least 0.1 mm.

Preferably, the extension in a vertical direction of the lines of holes 16 and 18 is such that said holes, in particular those of a larger size 18, are made in groups of two and staggered from each other in groups of four, alternating with the same number of holes 16 of a smaller diameter. Figure 2 illustrates such configuration, indicating in the central-lower part three specific references, that is LX, LY and LZ. The reference LX defines the grouping in a vertical direction of two horizontal lines of holes 16 wherein, overall, the holes initially comprise four holes 16 arranged in a quadrangle, followed by four holes 18 arranged in the same manner, and again by four holes 16, according to a continuous identical alternation. The reference LY defines the grouping of two horizontal lines of holes 18 in the same way, where the four initial holes are however of the type of a larger diameter, namely the holes 18. The alternation between groups of four holes 16 and 18 is also identically repeated in this grouping LY.

According to a further preferred characteristic of the invention, the surface of the burner 10 comprises a further line of smaller diameter holes 16 only, defined by the reference LZ, which is positioned between each LX and LY grouping, sub-dividing said groupings in a horizontal direction.

The smaller diameter holes 16 are equidistant from each other both in a horizontal and vertical direction, as are the larger diameter holes 18.

The slots 14 extending horizontally along the lines L1, L2 and LZ are preferably made in groups of four units, parallel to each other and extending in a vertical direction; each group of flour slots, of a substantially rectangular shape with rounded shorter sides, is separated from the subsequent group by a zone of the surface 10 without any holes. The slots 14 are preferably a width of 0.5 or 0.6 mm; both slots of a width of 0.5mm and slots of a width of 0.6 mm may be contemporarily present along the surface 10 of the burner, irrespective of the difference in diameter of at least 0.1 mm of the holes 16 and 18. In practice, the surface 10 of the burner may comprise holes 16 and 18 differentiated from each other as regards diameter and slots 14 of constant width, or holes 16 and 18 of constant diameter and slots 14 of differing width. It may also be envisaged that the surface 10 of the burner comprises, simultaneously, holes of different diameter 16 and 18 as specified above and slots 14 of equally differing width of at least 0.1 mm.

It has been found, by means of experimental tests conducted by the applicant, that a super-stoichiometric burner provided with a surface 10 having multiple holes extending in the direction described above makes it possible to vary the geometry of the flame and the oscillation of the heat emission, with elimination of the thermoacoustic resonance present in the traditional solutions as schematically represented in figure 1.

This depending on the geometric arrangement of holes of different diameter alternating with each other and making it possible to achieve a flame transfer function of defined amplitude and phase.

Clearly, it may be envisaged that such geometrical arrangement be different from that shown by way of example and that it envisages the alternation of holes 16 and 18 in a greater number, for example nine on three horizontal lines extending in a quadrangle of 3 x 3 or according to any other distribution.

Despite the invention having been described above with particular reference to one of its embodiments, given solely by way of a nonlimiting example, numerous modifications and variants will appear evident to a person skilled in the art in the light of the above description.

The present invention therefore sets out to embrace all the modifications and variants which fall within the scope of protection of the following claims.

## Claims

1. A super-stoichiometric burner, with a surface (10) provided with a multiplicity of through apertures in the form of slots and holes aligned in a horizontal and vertical direction, comprising a plurality of groups (12) of slots (14), of constant or varying width, forming lines L, L1 and L2 parallel to each other, said groups (12) of slots (14) being distanced from each other or forming a continuous plurality of slots (14), defining said lines L, L1, L2, wherein between each pair of said lines (L, L1, L2) circular holes (16,18) are made in groups, and extend in parallel lines in a horizontal and vertical direction **characterised in that** said holes (16-18) are of varying diameter to each other.

2. The burner according to claim 1, **characterised in that** said holes (16-18) alternate along each of the horizontal lines two by two with different diameters.

3. The burner according to claim 1, **characterised in that** the difference as regards diameter between said holes (16, 18) is at least equal to 0.1mm.

4. The burner according to claim 1, **characterised in that** the difference in width of the slots (14) is equal to at least 0.1mm.

5. The burner according to claim 2, **characterised in that** said second diameter is larger than said first diameter.

6. The burner according to claim 2, **characterised in that** the extension in a vertical direction of each of the lines of said holes defines groups of two holes (16, 18).

7. The burner according to claim 1, **characterised in that** two lines of said holes adjacent along a vertical direction define a grouping LX in which each line comprises two holes of said first diameter alternated with two holes of said second diameter.

8. The burner according to claim 5, **characterised in that** four lines of said holes adjacent along a vertical direction define respective groupings LX and LY, each of two lines, wherein the groups of two holes of a first diameter in two adjacent lines are staggered in a vertical direction with respect of the two holes of a second diameter in the remaining two adjacent lines.

9. The burner according to claim 8, **characterised in that** between each of said groupings LX and LY a line LZ having a horizontal extension of holes (16) is inserted.

10. The burner according to claim 2, **characterised in that** said holes (16, 18) are equidistant from each other in a horizontal and vertical direction.

11. The burner according to claim 1, **characterised in that** said slots (14) are made in groups of four units orientated vertically, each of said groups (12) being alternated with a part of the surface (10) without any holes.

## Patentansprüche

1. Super-stöchiometrischer Brenner mit einer Oberfläche (10), welche mit mehreren Durchgangsöffnungen in der Form von Schlitzen und Löchern versehen ist, die in horizontaler und vertikaler Richtung ausgerichtet sind, umfassend mehrere Gruppen (12) von Schlitzen (14) konstanter oder variierender Breite, welche Linien L, L1 und L2 ausbilden, die parallel zueinander sind, wobei die Gruppen (12) von Schlitzen (14) voneinander beabstandet sind oder eine kontinuierliche Mehrzahl von Schlitzen (14) ausbilden, welche die Linien L, L1, L2 festlegen, wobei zwischen jedem Paar von den Linien L, L1, L2 kreisförmige Öffnungen (16, 18) in Gruppen ausgebildet sind und sich in parallelen Linien in horizontaler und vertikaler Richtung erstrecken, **dadurch gekennzeichnet, dass** die Löcher (16-18) von gegenüber einander variierendem Durchmesser sind.

2. Brenner nach Anspruch 1, **dadurch gekennzeichnet, dass** die Löcher (16-18) sich entlang jeder der horizontalen Linien paarweise mit unterschiedlichen Durchmessern abwechseln.

3. Brenner nach Anspruch 1, **dadurch gekennzeichnet, dass** der Unterschied hinsichtlich des Durchmessers zwischen den Löchern (16, 18) zumindest gleich 0,1 mm ist.

4. Brenner nach Anspruch 1, **dadurch gekennzeichnet, dass** der Unterschied in der Breite der Schlitze (14) zumindest gleich 0,1 mm ist.

5. Brenner nach Anspruch 2, **dadurch gekennzeichnet, dass** der zweite Durchmesser größer als der erste Durchmesser ist.

6. Brenner nach Anspruch 2, **dadurch gekennzeichnet, dass** die Erstreckung in einer vertikalen Richtung von jeder der Linien von den Löchern eine Gruppe von zwei Löchern (16, 18) festlegt.

7. Brenner nach Anspruch 1, **dadurch gekennzeichnet, dass** die zwei Linien von den Löchern benachbart entlang einer Vertikalrichtung eine Gruppierung LX festlegen, in welcher jede Linie zwei Löcher des ersten Durchmessers umfasst, welche mit zwei Löchern des zweiten Durchmessers abwechseln.

8. Brenner nach Anspruch 5, **dadurch gekennzeichnet, dass** vier Linien der Löcher benachbart entlang einer Vertikalrichtung jeweilige Gruppierungen LX und LY festlegen, jede von zwei Linien, wobei die Gruppen von zwei Löchern eines ersten Durchmessers in zwei benachbarten Linien in einer Vertikalrichtung bezüglich der zwei Löcher eines zweiten Durchmessers in den zwei verbleibenden benachbarten Linien gestaffelt sind.

9. Brenner nach Anspruch 8, **dadurch gekennzeichnet, dass** zwischen jeder von den Gruppierungen LX und LY eine Linie LZ mit einer horizontalen Erstreckung der Löcher (16) eingesetzt ist.

10. Brenner nach Anspruch 2, **dadurch gekennzeichnet, dass** die Löcher (16, 18) zueinander in horizontaler und vertikaler Richtung äquidistant sind.

11. Brenner nach Anspruch 1, **dadurch gekennzeichnet, dass** die Schlitze (14) in Gruppen von vier Einheiten hergestellt sind, welche sich vertikal orientieren, wobei jede sich der Gruppen (12) mit einem Teil der Oberfläche (10) ohne Löcher abwechselt.

## Revendications

1. Brûleur super-stochiométrique, avec une surface (10) munie d'une multiplicité d'ouvertures traversantes sous forme de fentes et de trous alignés dans une direction horizontale et verticale, comprenant une pluralité de groupes (12) de fentes (14), de largeur constante ou variée, formant des lignes L, L1 et L2 parallèles les unes aux autres, lesdits groupes (12) de fentes (14) étant écartés l'un de l'autre ou constituant une pluralité continue de fentes (14), définissant lesdites lignes L, L1, L2 où des trous circulaires (16,18) sont constitués en groupes entre chaque paires desdites lignes (L, L1, L2) et s'étendent dans des lignes parallèles dans une direction horizontale et verticale, **caractérisé en ce que** lesdits trous (16-18) sont de diamètre varié l'un par rapport à l'autre.

2. Brûleur selon la revendication 1, **caractérisé en ce que** lesdits trous (16-18) alternent le long de chacune des lignes horizontales, deux à deux, avec des diamètres différents.

3. Brûleur selon la revendication 1, **caractérisé en ce que** la différence en termes de diamètre entre lesdits trous (16, 18) est au moins égale à 0,1 mm.

4. Brûleur selon la revendication 1, **caractérisé en ce que** la différence de largeur des fentes (14) est égale à au moins 0,1 mm.

5. Brûleur selon la revendication 2, **caractérisé en ce que** ledit second diamètre est supérieur audit premier diamètre.

6. Brûleur selon la revendication 2, **caractérisé en ce que** le prolongement dans une direction verticale de chacune des lignes desdits trous définit des groupes de deux trous (16,18).

7. Brûleur selon la revendication 1, **caractérisé en ce que** deux lignes desdits trous adjacents le long d'une direction verticale définissent un groupement LX dans lequel chaque ligne comprend deux trous dudit premier diamètre alternant avec deux trous dudit second diamètre.

8. Brûleur selon la revendication 5, **caractérisé en ce que** quatre lignes desdits trous adjacents le long d'une direction verticale définissent des groupements respectifs LX et LY, chacun composé de deux lignes, où les groupes de deux trous d'un premier diamètre dans deux lignes adjacentes sont décalés dans une direction verticale par rapport aux deux trous d'un second diamètre dans les deux lignes adjacentes restantes.

9. Brûleur selon la revendication 8, **caractérisé en ce qu'**une ligne LZ contenant un prolongement horizontal de trous (16) est introduite entre chacun desdits groupements LX et LY.

10. Brûleur selon la revendication 2, **caractérisé en ce que** lesdits trous (16, 18) sont équidistants l'un de l'autre dans une direction horizontale et verticale.

11. Brûleur selon la revendication 1, **caractérisé en ce que** lesdits trous (14) sont constitués en groupes de quatre unités orientées verticalement, chacun desdits groupes (12) alternant avec une partie de la surface (10) sans le moindre trou.
